(19)

Europäisches
Patentamt

European
Patent Office

Office européen
des brevets

(11) **EP 3 107 032 A1**

(12) **EUROPEAN PATENT APPLICATION**

(43) Date of publication:
**21.12.2016 Bulletin 2016/51**

(51) Int Cl.:
**G06K 9/00** *(2006.01)*

(21) Application number: **15305938.1**

(22) Date of filing: **17.06.2015**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

</td><td>

(72) Inventors:
• **BAILLARD, Caroline**
  **35576 Cesson Sévigné (FR)**
• **LE CLERC, Francois**
  **35576 CESSON-SEVIGNE (FR)**
• **ALLEAUME, Vincent**
  **35576 CESSON SEVIGNE (FR)**

(74) Representative: **Browaeys, Jean-Philippe et al**
**TECHNICOLOR**
**1-5, rue Jeanne d'Arc**
**92130 Issy-les-Moulineaux (FR)**

</td></tr>
</table>

(54) **METHOD AND DEVICE FOR FACIAL LANDMARK ANNOTATION AND CORRESPONDING COMPUTER PROGRAM PRODUCT AND COMPUTER-READABLE MEDIUM**

(57)    The invention relates to a method for annotating, with a set of K landmarks, each image $I_i$ of a set of images to annotate, from a set of previously annotated images.

According to the invention, said method is implemented by a processor and comprises, for each annotated face image $I_j$:

- determining (11) a warping $\widehat{W_{i,j}}$ between said image $I_i$ and said image $I_j$,

- warping (12) said image $I_i$ using said warping $\widehat{W_{i,j}}$ delivering a warped image $\widehat{W_{i,j}}(I_i)$,

- determining (13) image similarity information *Sim(i,j)* between said image $I_j$ and said warped image $\widehat{W_{i,j}}(I_i)$,

and:
- selecting (14), among said set of previously annotated face images, a best annotated image $I_{jbest}$ being associated with similarity information of the highest value,
- determining (15) a location (x,y) of each landmark $L_{i,k}$ of said set of K landmarks of said image $I_i$ by using a corresponding location of each landmark of said best annotated image $I_{jbest}$.

**EP 3 107 032 A1**

Fig. 1

**Description**

1. <u>FIELD OF THE INVENTION</u>

The invention relates to computer vision. More specifically, the invention relates to landmark annotation for face analysis (face detection, facial point detection, face and facial expression recognition, etc.).

Manual annotation of facial images, as known as landmark annotation, is a key stage for many learning tasks in computer vision and requires accuracy, which is not a trivial task.

The invention finds particular application in any field implementing facial analysis such as character animation in computer-generated imagery (CGI) movies or video games, photo or video retouching, human-computer interaction, image or video enhancement, forensics, and user authentication.

2. <u>TECHNICAL BACKGROUND</u>

For many decades, developing a fast, accurate and robust automated system for recognizing a face and facial expression has been a goal in computer vision.

In recent years, the most successful face alignment methods are based on deformable models, and have been developed for non-rigid object tracking. Such methods have started to make their way into the field of real-time face and facial expression recognition.

Regarding this deformable model based approach, the non-rigid shape and visual texture (intensity and colour) of an object are statistically modelled using a low dimensional parametric representation obtained by a principal component analysis (PCA) to a set of labelled training data, such as training images annotated with landmarks.

After these parametric models have been created, the parameter values can be estimated to fit a new image of the object, which might vary in shape or texture or both.

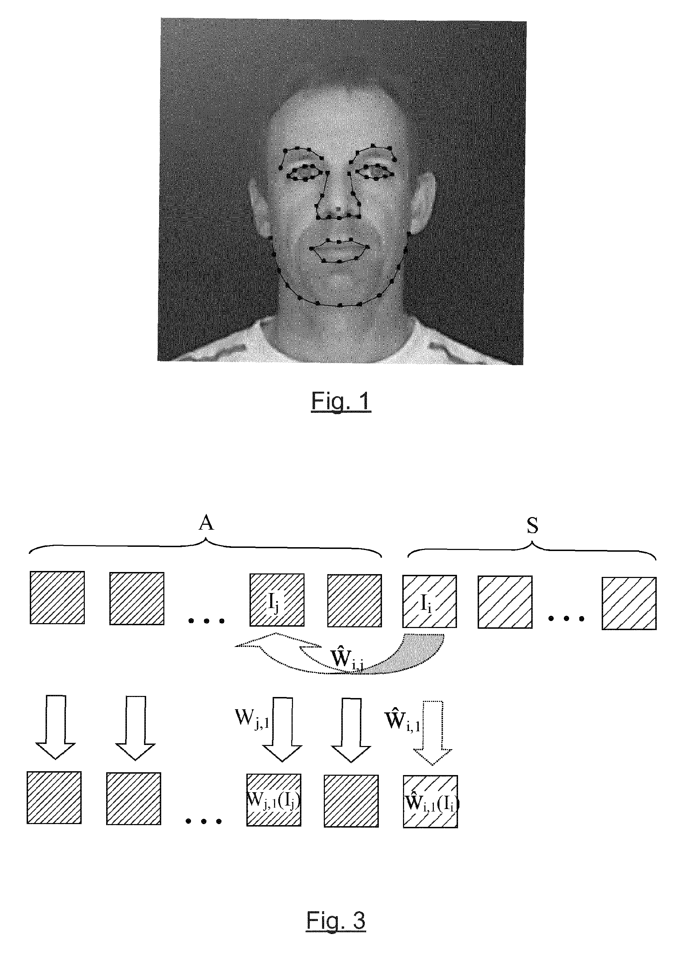

The success of these methods is very dependent on the quality of the training data set and the quality of the annotation stage. An example of annotation is illustrated by figure 1 where a topology comprising five, eight, eleven, thirteen landmarks is used for annotating respectively, each eyebrow, each eye or the mouth, the nose contour, and the neck contour.

Such annotation stage is typically carried out manually, which is not a trivial task, as it requires a human trained to perform this task. Such task is time-consuming, labour-intensive, (considering that a lot of annotations are often redundant and convey the same information), and sometimes still inaccurate considering human factors such as fatigue or lack of concentration. As a consequence face detection results are not always optimal and sometimes marred by errors.

Some methods have been proposed to reduce the workload of operators such as the one disclosed by Y. Tong ("Automatic facial landmark labeling with minimal supervision"), IEEE Conference on Computer Vision and Pattern Recognition, 20-25 June 2009 pages 2097-2104.

Such method aims at globally minimizing a cost function defined on both annotated and unannotated images, and is based on a piecewise affine warp between all images, which is not relevant in case of large changes in face expression or head pose in the different images.

Another approach is based on curve descriptors, aiming at representing facial contours rather than a landmark set, has been developed and disclosed by X. Liu ("Facial Contour labelling vi Congealing") ECCV2010 European Conference on Computer Vision.

More recently, a semi-automatic annotation using a generative model called Active Orientation Models (AOM) has been proposed by C. Sagonas ("A semi-automatic methodology for facial landmark annotation") IEEE Conference on Computer Vision and Pattern Recognition, 23-28 June 2013 pages 896-903. More precisely, an AOM-based deformable face model is obtained from an existing set of annotated images, which is then iteratively updated with fitting results, which are labelled as "good" by an operator using a user interaction.

However, all these approaches are global (in other words the same approach is used for all images), require a minimal number of annotated images, and limited to moderate changes in face expression or head pose.

Thus, there remains a significant need for (semi-) automatic annotation systems, which can provide, in a reasonable time, good results in case of large changes in expression or head pose within the set of images to annotate.

3. <u>SUMMARY</u>

A first aspect of the present invention relates to a method for annotating, with a set of landmarks, each face image of a set of face images to annotate, from a set of previously annotated face images, the method being implemented by a processor and comprising,

for each annotated face image of said set of previously annotated face images:

- determining a warping function between said face image to annotate and said annotated face image,
- warping said face image to annotate, using said warping function, to obtain a warped image,
- determining respective image similarity information between said annotated face image and said warped image,

the method further comprising:

- selecting, among said set of previously annotated face images, a best annotated face image, said best annotated face image being associated with similarity information of the highest value,
- determining a location of each landmark of said set of landmarks of said face image to annotate by using a corresponding location of each landmark of a set of landmarks of said best annotated face image.

Embodiments of the first aspect of the invention thus proposes a new (semi-) automatic technique for efficiently annotating facial landmarks in a database of images, even in case of large differences in facial expressions and head poses, by introducing a technique based on a selection process of the best (i.e. the closest) annotated face image for annotating a face image to annotate.

In particular, said best annotated face image is selected among a set of previously annotated images by determining, for each annotated face image of the set of previously annotated face images, similarity information.

One piece of said similarity information is obtained by using a global warping function between the image to annotate and one annotated face image of the set of previously annotated face images. More precisely, said warping function is applied to the considered annotated face image to deliver a warped image, which is then compared to the face image to annotate to deliver said similarity information associated with the considered annotated face image.

Such a global warping function between two images (one already annotated and the other not annotated) aims to make these two images appear as similar as possible by removing all variations due to global image transforms such as head rotation.

It may be noted that in the present disclosure, the term *"global"* refers to the whole image, and is opposed to *"local",* which refers to a part (i.e. a patch) of the image but not the whole image.

Then, when a global similarity information is obtained for each annotated face image of the set of previously annotated face images, the annotated face image associated with similarity information of the highest value is selected as the best annotated image.

Once such closest annotated image is determined, its set of landmarks is used for locating each landmark of the set of landmarks of the face image to annotate. Indeed, according to the embodiments of the present invention, all the annotated face images have a common set of landmarks (in other words a common annotation topology with, for instance, eight landmarks used in each image for delimiting the mouth like the ones represented on **figure 1,** the position of said landmarks differing from one face image to another due to a change of face expression). Thus, the selection of the best annotated face image for the considered image to annotate will permit a coarse initial annotation of the face image to annotate.

The steps of this new technique may be performed by a processor, which allows an image to be automatically annotated with landmarks by taking into consideration the corresponding landmarks of the best annotated face image.

Thus, such a new technique permits a tedious and time-consuming manually face image annotation performed by an operator to be avoided or reduced.

According to an embodiment of the invention, said image similarity information is a sum of square differences between said annotated face image and said warped image.

Such global computation between the warp of the considered annotated face image and the image to annotate is indeed easy to implement while being accurate for measuring the similarity between these images.

According to an embodiment , said sum is obtained by considering only the pixels located in an area, the contour of which is a line linking landmarks of said annotated face image.

Such aspect permits to reduce the computation time and the complexity required for determining similarity information associated to each of the previously annotated face images.

According to another embodiment, said warping function is obtained by implementing a geometry-based Procrustes analysis and/or a texture-based least square congealing.

Indeed, such a warping function can be provided by an external device or can be also automatically determined by the device according to embodiments of the invention by implementing the known geometry-based Procrustes analysis and/or a texture-based least square congealing as disclosed by M. Cox et al. ("Least squares congealing for Unsupervised Alignment of images"), IEEE International on Conference on Computer Vision and Pattern Recognition (CVPR), June, 2008.

For instance, the known and robust geometry-based Procrustes analysis can be applied on points provided by the known Scale-invariant feature transform (SIFT).

According to a particular embodiment, when said geometry-based Procrustes analysis and texture-based least square congealing are both implemented, said warping function corresponds to the warping function leading to similarity information of the highest value when comparing the value of similarity information resulting from the warping function obtained with said geometry-based Procrustes analysis, with the value of similarity information resulting from the warping function obtained with said texture-based least square congealing.

Indeed, said geometry-based Procrustes analysis and said texture-based least square congealing are complementary considering for instance that for generic faces "in the wild", the texture-based least square congealing performs better, whereas for a user-specific face database geometry-based Procrustes analysis will be more accurate.

Thus, to obtain said warping function, different methods can be used (i.e. geometry-based Procrustes analysis or a texture-based least square congealing) depending on the nature of the image to annotate, the method providing the warping function leading to similarity information of the highest value being selected.

According to another embodiment, the method further comprises a previous locating of a face inside each image of said set of face images to annotate, said face locating implementing a Viola-Jones method.

Such a feature is particularly recommended when face images in the database have very different scale and location.

The method for annotating according to any one of the preceding embodiments, wherein said set of previously annotated face images comprises at least a reference image, previously manually annotated, said reference image providing a common reference geometry for all face images of said set of previously annotated face images and of said set of face images to annotate,

and wherein said determining of a location of each landmark of said set of landmarks of said face image to annotate implements at least a warping of said set of landmarks of said best annotated face image using a warping function between said best annotated face image and said reference image delivering said set of landmarks of said face image to annotate expressed in said common reference geometry of said reference image.

Such manually annotated reference image provides a common reference geometry for all images (comprising previously annotated images and images to annotate) and is used for annotating all the other images to annotate using the method according to embodiments of the invention.

For instance, such a reference image corresponds to a face in a front and neutral position, and is useful since all images are warped to this common referential to compensate for translation, scaling and in-plane rotation between images. Thus, such a reference image allows meaningful comparison of landmark locations and texture across images.

The warping function between said best annotated face image and said reference image is known at the time of processing the face image to annotate as described in details in the following. Such warping function between said best annotated face image and said reference image is used according to embodiments of the invention to express, in said common reference geometry of said reference image, said set of landmarks of said face image to annotate.

Thus, such a step provides automatically a coarse initial annotation of the face image to annotate, the annotation being expressed in the common reference geometry of the reference image.

According to another embodiment, the method according to the first aspect of the invention further comprises, for each landmark of said set of landmarks of said face image to annotate expressed in said common reference geometry of said reference image, a refining of its location comprising:

- determining a texture patch of a predetermined size centred on said location of said landmark of said face image to annotate,
- for each annotated face image of said set of previously annotated face images:

  o warping said annotated face image using a warping function between said annotated face image and said reference image delivering a warping image,
  o in said warping image, determining a texture patch of said predetermined size centred on said landmark corresponding to said landmark of said face image $I_i$ to annotate,
  o moving said texture patch of said face image to annotate within a research area, and determining a displacement of the location of the centre of said texture patch, which maximises the value of a patch similarity information between said texture patch of said face image to annotate and said texture patch of said warping image,

- determining, among said set of previously annotated face images, the face annotated image and a corresponding optimal displacement providing the highest value of patch similarity information,
- refining said location of said landmark of said set of landmarks of said face image $I_i$ to annotate by applying said corresponding optimal displacement.

By virtue of this embodiment, an automatic refinement of the location of each landmarks provided by the coarse initial annotation is also implemented according to an embodiment of the present invention.

In comparison with the global coarse initial automatic annotation, such automatic refinement is based on a local approach for refining the location of each landmark.

Indeed, the optimal location of each landmark is obtained by considering the couple (made of a face annotated image and the corresponding optimal displacement of the initial location of the considered landmark delivered by the global coarse initial automatic annotation), which provides the highest value of a local patch similarity information, and which can be different from one landmark to another.

According to a particular embodiment, said patch similarity information, between said texture patch of said face image to annotate and said texture patch of said warping image, is obtained using one of the operations belonging to the group comprising:

- a sum of square differences,
- a sum of absolute differences,
- a normalized cross-correlation
- a zero-mean normalized cross-correlation.

In particular, normalized cross-correlation such as the one disclosed by J. P. Lewis ("Fast Normalized Cross-Correlation"), Vision Interface Conference, 1995, pages 120-123, allows making said patch similarity information robust to changes in lighting conditions.

According to another embodiment, said research area is identical or different from one landmark to another landmark.

For instance, said research area can be larger for landmarks corresponding to lower lips than the one used for landmarks of eye corners.

According to another embodiment, said set of landmarks comprises two categories of landmarks:

- a first category of landmarks comprising landmarks corresponding to extremities of facial contours or strong contrast points of said face image to annotate,
- a second category of landmarks comprising landmarks located between two extremities of a facial contour of said face image to annotate,

the position of each landmark of said second category of landmarks being automatically determined by implementing a curvilinear abscissa along a contour defined between two extremity landmarks of said first category of landmarks.

For instance, the category of landmark points should be manually indicated by the operator when he annotates manually the reference image from which all the other images to annotate can be annotated using the method according to the present disclosure. Such annotation depends on the face shape and contrast, in particular, when there is a change in curvature in the face, such a change is annotated by a landmark belonging to the first category.

Thus, two or three, six or seven, and three landmark points can be used respectively for the eyebrows, the nose, and the chin (which is usually really regular except in case of beard).

Regarding the prior art, the landmarks of both categories are similarly processed, whereas in embodiments of the invention the landmarks of the second category are automatically moved along a contour located between two landmarks belonging to the first category of landmarks, so that said landmarks belonging to the second category have the same relative position (curvilinear abscissa) as in the reference image.

For instance, considering one of the eyebrows of **figure 1,** among the five landmarks required to annotate said eyebrow, the two extremities of said eyebrow belong to the first category, whereas the three landmarks located between these two extremities belong to the second category. Thus, applying such aspect of embodiments of the invention, the relative position of the landmarks belonging to said second category is the same in every image to ensure an evenly distribution of them along each face contour defined between their two associated extremities landmarks belonging to the first category of landmarks.

It has to be noted that according to this aspect of the disclosure, the manual annotation of the reference image implements also such an automatic distribution of landmarks belonging to said second category to reduce the required time of such manual operation. Thus, considering the example of **figure 1,** which comprises, for instance, thirty-seven landmarks, nineteen landmarks (corresponding respectively to the extremities of eyebrows and of the neck contour, the eyes and lip corners and the sharp edges of the nose contour), belong to the first category and are first manually located on the reference image, and then the remaining eighteen landmarks, belonging to the second category, are automatically and evenly distributed along the contour they belong to, with respect to the starting and ending landmark of the first category defining such contour.

According to another embodiment, the method for annotating according to the first aspect of the invention further comprises:

- considering a warping function $\widehat{W_{i,1}}$ between said face image $I_i$ to annotate and said and said reference image $I_1$,

such that $\widehat{W_{i,1}} = W_{jbest,1} \cdot \widehat{W_{i,jbest}}$, applying an inverse transform $\widehat{W_{i,1}}^{-1}$ to the position of each landmark $L_{i,k}$ of said set of K landmarks of said face image $I_i$ to annotate expressed in said common reference geometry of said reference image $I_1$, delivering a face image $I_i$ annotated with said landmarks $L_{i,k}$ with $1 \leq k \leq K$.

- displaying said face image $I_i$ annotated with said landmarks $L_{i,k}$ with $1 \leq k \leq K$ to an operator,
- in case of error in landmarks location, receiving a correction information from said operator,
- using said correction information for updating said face image $I_i$ annotated with said landmarks $L_{i,k}$ with $1 \leq k \leq K$, delivering a validated annotated face image $I_i$
- placing said validated annotated face image $I_i$ into said set A of previously annotated face images,
- determining a validated warping function $W_{i,1}$ between said validated annotated face image $I_i$ and said reference image $I_1$ by implementing a geometry-based Procrustes analysis or by implementing a Delaunay triangulation.

Said embodiment permits validation or manual refinement the result delivered by the steps performed automatically by a processor according to previous aspects as described above. In this case, the method provided by the present invention is thus semi-automatic. Said phase of manual refinement can be implemented directly after the coarse initial annotation of the face image to annotate provided automatically by the method according to embodiments of the invention, or after the optional automatic refinement as previously described.

Once the validated annotated face image is obtained, it is placed in the set of previously annotated face images, and the validated warping function between said validated annotated face image and said reference image is also computed to be used then for processing the next image to annotate.

Thus, considering a set of M images to annotate, with M>2, the manual intervention of the operator will decrease as the number of annotated face images increases, the method for annotating according to the present disclosure starting from the manually annotated reference image.

A second aspect of the present invention relates to a device for annotating, with a set of landmarks, each face image of a set of face images to annotate, from a set of previously annotated face images,
wherein said device comprises a processor configured to control,
for each annotated face image of said set of previously annotated face images:

- a module for determining a warping function between said face image to annotate and said annotated face image,
- a module for warping said face image $I_i$ to annotate using said warping function delivering a warped image,
- a module for determining respective image similarity information between said annotated face image and said warped image,
and:
- a module for selecting, among said set of previously annotated face images, a best annotated face image, said best annotated face image being associated with similarity information of the highest value,
- a module for determining a location of each landmark of said set of landmarks of said face image $I_i$ to annotate by using a corresponding location of each landmark of a set of landmarks of said best annotated face image.

Such a device can be especially adapted to implement the method for annotating, with a set of landmarks, each face image of a set of face images to annotate, from a set of previously annotated face images, described here above. It could of course comprise the different characteristics pertaining to the method for annotating, with a set of landmarks, each face image of a set of face images to annotate, from a set of previously annotated face images, according to an embodiment of the disclosure, which can be combined or taken separately. Thus, the characteristics and advantages of the device are the same as those of the method for annotating, with a set of landmarks, each face image of a set of face images to annotate, from a set of previously annotated face images, and are not described in more ample detail.

A further aspect of the invention pertains to a computer program product downloadable from a communication network and/or recorded on a medium readable by computer and/or executable by a processor, comprising program code instructions for implementing the steps of the method for annotating, with a set of landmarks, each face image of a set of face images to annotate as described previously when it is executed by a processor.

In addition, another aspect of the present invention concerns a non-transitory computer-readable medium comprising a computer program product recorded thereon and capable of being run by a processor, including program code instructions for implementing the steps of the method for annotating, with a set of landmarks, each face image of a set of face images to annotate as described previously when it is executed by a processor.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which may be substantially represented in computer readable storage media and so executed by a computer or processor, whether or not such computer or processor is explicitly shown.

## 4. BRIEF DESCRIPTION OF THE DRAWINGS

The disclosure will be better understood and illustrated by means of the following embodiment and execution examples, in no way limitative, with reference to the appended figures in which:

- Figure 1 illustrates an example of an annotated face image, as known from the state of art;
- Figure 2 is a flow chart illustrating the main steps of a method for annotating, with a set of landmarks, each face image of a set of face images to annotate, from a set of previously annotated face images according to an embodiment of the invention;

- Figure 3 illustrates global warping functions between annotated image and image to annotate according to an embodiment of the invention,
- Figure 4A to 4C illustrates a particular embodiment of the method for annotating, with a set of landmarks, each face image of a set of face images to annotate, from a set of previously annotated face images;
- Figure 5 is a block diagram of a device according to an embodiment of the invention for implementing ta method for annotating, with a set of landmarks, each face image of a set of face images to annotate, from a set of previously annotated face images according to figure 2.

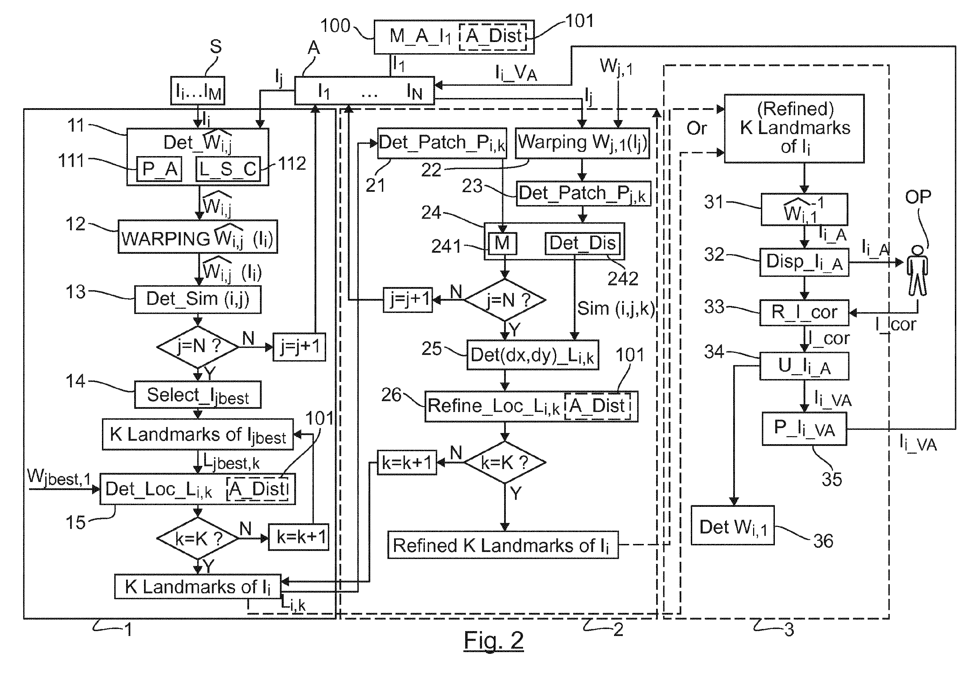

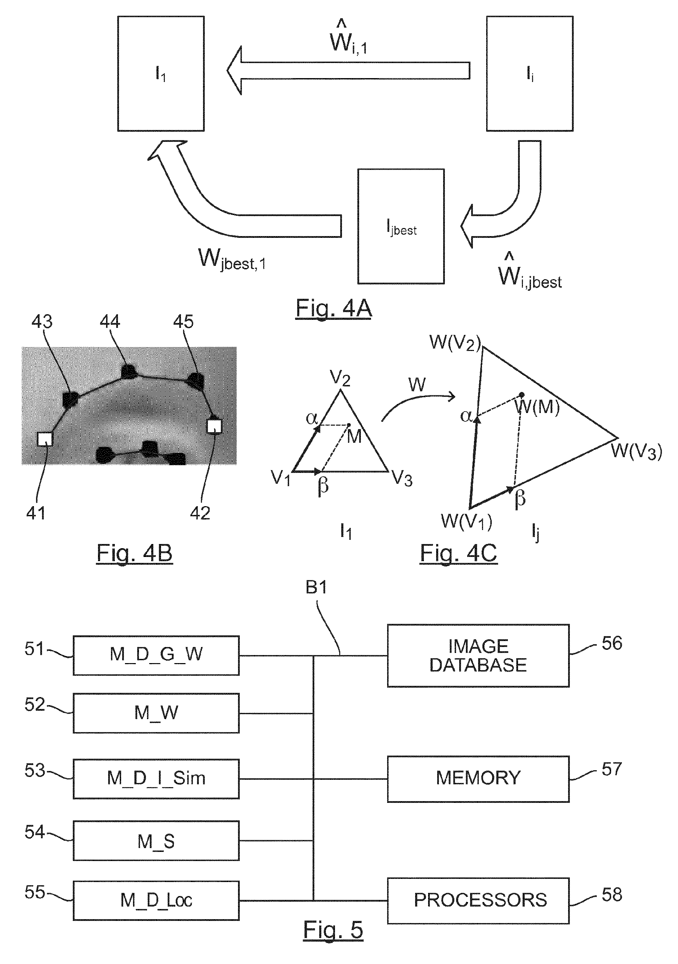

In Figures 2 and 5, the represented blocks are purely functional entities, which do not necessarily correspond to physically separate entities. Namely, they could be developed in the form of software, hardware, or be implemented in one or several integrated circuits, comprising one or more processors.

## 5. DESCRIPTION OF EMBODIMENTS

It is to be understood that the figures and descriptions of the present disclosure have been simplified to illustrate elements that are relevant for a clear understanding of the present disclosure, while eliminating, for purposes of clarity, many other elements found in typical display devices.

Embodiments of the present invention provide a new technique for annotating, with a set of landmarks, each face image of a set of face images to annotate, from a set of previously annotated face images.

Given a new image, the closest annotated image is first selected, using a global similarity measure, which provides a coarse annotation. Then, for each landmark, the closest annotated image (which can be different for every landmark) is selected using a local similarity measure, which is used to refine the landmark location. In case of an outlier (no similar landmark found), an operator can manually provide a new annotation to the system, which will update the annotation database for a subsequent labelling stage.

Thus, the approach proposed in embodiments of the present invention is able to cope with arbitrarily large differences in expression and head pose.

The main steps of the method according to an embodiment of the invention are illustrated in **Figure 2.**

An image to annotate $I_i$ of a set $S$ of $M$ face images to annotate with landmarks and a set $A$ of $N$ previously annotated face images are considered as an input.

The purpose of embodiments of the invention is to annotate all the images belonging to said set $S$ of $M$ face images to annotate, and in particular said image $I_i$ with a set of K landmarks $[L_{i,1}, ..., L_{i,k}, .., L_{i,K}]$, K being an integer, $1 \leq k \leq K$.

Considering the set $A$ of N previously annotated face images, said set $A$ of previously annotated face images comprises at least a reference image $I_1$, previously manually annotated (100), said reference image $I_1$ providing a common reference geometry for all face images of said *set A* of previously annotated face images and of said set of face images to annotate.

Said reference image $I_1$ corresponds to the rest pose of the face (frontal head pose, neutral expression), and it associated landmarks are $[L_{1,1}, ..., L_{1,k}, ..., L_{1,K}]$, K being an integer, $1 \leq k \leq K$.

Indeed, all images will be annotated with a common annotation topology comprising for each image K landmarks. Thus, the landmark $L_{1,1}$ of said reference image $I_1$ image will correspond to the landmark $L_{i,1}$ of the considered image $I_i$ to annotate and is associated for example with the left corner of the lip as represented on the face image **in figure 1.**

Optionally (as represented in dotted line), said set of K landmarks comprises two categories of landmarks:

- a first category of landmarks comprising landmarks (41, 42) corresponding to extremities of facial contours or strong contrast points of said face image $I_i$ to annotate as illustrated **by figure 4B,**
- a second category of landmarks comprising landmarks (43, 44, 45) located between two extremities of a facial contour of said face image $I_i$ to annotate (i.e. the landmarks of the second category are always surrounded, along a contour, by two landmarks belonging to the first category,

the position of each landmark of said second category of landmarks being automatically determined (101) by implementing a curvilinear abscissa along a contour defined between two extremity landmarks of said first category of landmarks.

According to the prior art, the traditional manual annotation process of said reference image $I_1$, the primary points (i.e. the landmarks belonging to said first category) are typically first located by the operator OP at an accurate location depending on the image content only. The secondary points (i.e. the landmarks belonging to said second category) are only located afterwards and their location depends on the primary point location. Thus, according to the traditional manual annotation both primary and secondary landmark points are similarly processed.

Regarding the proposed option (as represented in dotted line in **figure 2** and as illustrated by **figure 4B),** the category of landmark points should be manually indicated by the operator when he annotates the reference image $I_1$, once the primary landmark points have been manually located by the operator, the secondary landmark points are automatically and evenly redistributed (101) along the contour they belong to.

It as to be noted, that accurate estimates of the locations of the landmarks are known for already annotated images of said set A comprising said reference image $I_1$.

As a result, accurate warping function $W_{j,1}$ from an already annotated image $I_j$ to the reference image $I_1$ can be computed as illustrated by **figure 3.**

Such a warping function $W_{j,1}$ can be obtained either as a global similarity using the known Procrustes analysis, or using a geometry-based Procrustes analysis for instance based on SIFT points, or using texture-based least square congealing, or using a piecewise affine warp obtained using Delaunay triangulation.

More precisely, as represented on **figure 4C,** any pixel $x_k$ in image $I_1$ must lie within one of the triangles in the mesh associated to image $I_1$, obtained for instance by Delaunay triangulation of the set of landmark locations. Consider a triangle with vertex positions $(V_1, V_2, V_3)$ in the mean shape image $I_1$, and let W be the affine restriction of the piecewise-affine warp $W_{j,1}$ to this triangle. The images of the triangle vertices $(W(V_1), W(V_2), W(V_3))$ are the known locations of the vertices of the corresponding triangle in the model geometry $g_j$ of said image $I_j$. Within the considered triangle, the correspondences between the locations of the three vertices in $s_0$ and in $g_j$ uniquely determine, as the solution of a linear system, the six parameters $(a_g)$, $1 \leq g \leq 6$, of the affine warp W.

Thus, the warp $W$ maps each pixel $x_k = (x,y)^T$ of the considered triangle in $I_1$ to a point $W(x_k) = (a_1 + a_2x + a_3y, a_4 + a_5x + a_6y)^T$ of the corresponding triangle in $g_j$. As illustrated on **figure 4C,** if $x_k$ is defined by its barycentre coordinates $(\alpha, \beta)$ in $s_0$:

$$\overrightarrow{V_1 x_k} = \alpha \overrightarrow{V_1 V_2} + \beta \overrightarrow{V_1 V_3}$$

then the location of the image $W(x_k)$ of $x_k$ is given by:

$$\overrightarrow{W(V_1)W(x_k)} = \alpha\overrightarrow{W(V_1)W(V_2)} + \beta\overrightarrow{W(V_1)W(V_3)}$$

The details of the computation of $\alpha$ and $\beta$ is disclosed by I. Matthews et al. in section 4.1.1 of ("Active Appearance Models Revisited"), International Journal of computer Vision, Vol. 60, n°2, Nov. 2004, pages 135-164.

The collection of such affine warps W for each triangle of $I_1$ forms a piecewise affine $W_{j,1}$ warp from $I_1$ to $g_j$.

For a not yet annotated image $I_i$ a first phase (1) of coarse initial annotation is implemented according to embodiments of the invention.

For each annotated face image $I_j$ of said set A of previously annotated face images, a first step 11, is the determining (11) of a warping function $\widehat{W_{i,j}}$ between said face image $I_i$ to annotate and said annotated face image $I_j$ as represented in **figure 3.**

More precisely, said warping function $\widehat{W_{i,j}}$ is obtained (11) by implementing a geometry-based Procrustes analysis (111) and/or a texture-based least square congealing (112). These two ways of obtaining are complementary.

The first one is the geometry-based Procrustes analysis (111), based on SIFT points for instance. In this case, such geometry-based Procrustes analysis (111) implements the following substeps:

- extraction of SIFT points in both images $I_i$ and $I_j$,
- matching SIFT points,
- robust Procrustes analysis using matched SIFT points.

The second way, the texture-based least square congealing (112) provides a solution to the problem of aligning an ensemble of images (i.e. all the images $I_j$ are simultaneously warped onto the image $I_i$) in an unsupervised manner by simultaneously estimating the warp parameter updates for every image of the stack (given one reference image that remains static).

In the method proposed by M. Cox et al. ("Least squares congealing for Unsupervised Alignment of images"), IEEE International on Conference on Computer Vision and Pattern Recognition (CVPR), June, 2008, a sum of square difference (SSD) is used for measuring misalignment between the images. The misalignment function is minimized using a Gauss-Newton Gradient descent approach. Starting from identity, the gradient descent approach is applied to iteratively update the warp parameters for every image until convergence.

Preferably, said geometry-based Procrustes analysis (111) and texture-based least square congealing (112) are both implemented, said warping function $\widehat{W_{i,j}}$ corresponds to the warping function leading to a similarity score (provided by a SSD) of the highest value when comparing the value of similarity resulting from the warping function $\widehat{W_{i,j}}_P$ obtained with said geometry-based Procrustes analysis, with the value of similarity information resulting from the warping function $\widehat{W_{i,j}}_C$ obtained with said texture-based least square congealing.

It can be noted that if the face images in the database have very different scale and location, then it might be useful to first locate the face using a Viola-Jones algorithm for instance (not represented).

Once, such warping function $\widehat{W_{i,j}}$ is obtained (11), a warping (12) of said face image $I_i$ to annotate, is implemented, delivering a warped image $\widehat{W_{i,j}}(I_i)$.

Then, image similarity information $Sim(i,j)$ between said annotated face image $I_j$ and said warped image $\widehat{W_{i,j}}(I_i)$, is determined (13).

In particular said image similarity information is a sum of square differences between said annotated face image $I_j$ and said warped image $\widehat{W_{i,j}}(I_i)$ and is defined as: $\mathrm{Sim(i,j)} = \mathrm{SSD}(\widehat{W_{i,j}}(I_i), I_j)$.

Optionally, said sum is obtained by considering only the pixels located in an area, the contour of which is a line linking landmarks of said annotated face image $I_j$.

Once, all images $I_j$ of said set A of N previously annotated face images have been processed a selecting (14), among said set A of previously annotated face images, of a best annotated face image $I_{jbest}$ is implemented, said best annotated face image $I_{jbest}$ being associated with similarity information of the highest value: $\mathrm{Sim(i,j}_{best}) \geq \mathrm{Sim(i,j)}$.

Then, a location (x,y) of each landmark $L_{i,k}$ of said set of K landmarks of said face image $I_i$ to annotate is determined (15) by using a corresponding location of each landmark $L_{jbest,k}$ of a set of K landmarks of said best annotated face image $I_{jbest}$.

More precisely, said determining (15) of a location (x,y) of each landmark $L_{i,k}$ of said set of K landmarks of said face image $I_i$ to annotate implements at least a warping of said set of K landmarks of said best annotated face image $I_{jbest}$ using a warping function $W_{jbest,1}$ between said best annotated face image $I_{jbest}$ and said reference image $I_1$ delivering said set of K landmarks of said face image $I_i$ to annotate expressed in said common reference geometry of said reference image $I_1$.

In other words, and as illustrated by **figure 4A,** the K landmarks $L_{jbest}$ of the annotated face image $I_{jbest}$ are used to initialize the K landmarks $L_i$ of the image to annotate $I_i$, which are expressed in the common reference geometry of the reference image $I_1$.

Indeed, as previously explained, all landmarks are expressed in the common geometrical reference of the reference image $I_1$, this is the reason why the initial landmarks locations for the K landmarks $L_i$ of the image to annotate $I_i$ are obtained by warping the landmarks $L_{jbest}$ to $I_1$.

Thus, as illustrated by **figure 4A,** $L_i = w_{jbest,1}(L_{jbest})$.

Optionally, (as represented in dotted line **in figure 2),** as already described in relation with **figure 4B,** when the category of landmark points has been manually indicated by the operator when he annotated the reference image $I_1$, for the considered image to annotate $I_i$, once the primary landmark points have been automatically set (15) regarding the equation $L_i = w_{jbest,1}(L_{jbest})$, the secondary landmark points are automatically and evenly redistributed (101) along the contour they belong to.

First phase (1) provides thus coarse estimates of the landmarks locations of the considered image to annotate $I_i$, such landmarks locations being computed and expressed in the common geometrical referential of image $I_1$. Owing to this common referential, the texture around a given landmark can be matched across images.

At this step, the first phase (1) of coarse initial annotation ends, which allows automatically annotating an image $I_i$ with landmarks by taking into consideration the corresponding landmarks of the best annotated face image. Then, two other phases: an automatic refinement (phase 2) and a manual refinement (phase 3) can be implemented.

It has to be noted that in the particular case of the second image to annotate (i.e. the set A of previously annotated face images comprises only the manually anotated reference image $I_1$), the selecting step (14) is trivial since only one annotated image is available (i.e. the reference image $I_1$). However, the automatic refinement (phase 2) and/or the manual refinement (phase 3) will be implemented to take into account the differences between the reference image $I_1$ and the first image that is annotated. The operator, will correct only the wrong landmarks for the image points of the second image to annotate, which are differing from the corresponding ones in the reference image $I_1$.

More precisely, during the automatic refinement (phase 2), the location of each landmark of the considered image to annotate $I_i$ is refined so as to maximize the similarity between the local texture around the refined location and the local texture around the same landmark in already annotated images.

Specifically, for each landmark $L_{i,k}$ of said set of landmarks of said face image $I_i$ to annotate expressed in said common reference geometry of said reference image $I_1$, a refining of the location (x,y) of said landmark $L_{i,k}$ comprises:

- determining (21) a texture patch $P_{i,k}$ of a predetermined size centred on said location (x,y) of said landmark $L_{i,k}$ of said face image $I_i$ to annotate,
- for each annotated face image $I_j$ of said set A of previously annotated face images:

   o warping (22) said annotated face image $I_j$ using a warping function $W_{j,1}$ between said annotated face image $I_j$ and said reference image $I_1$ delivering a warping image $W_{j,1}(I_j)$,
   o in said warping image $W_{j,1}(I_j)$, determining (23) a texture patch $P_{j,k}$ of said predetermined size centred on said landmark $L_{j,k}$ corresponding to said landmark $L_{i,k}$ of said face image $I_i$ to annotate,
   o moving (241) said texture patch $P_{i,k}$ of said face image $I_i$ to annotate within a research area, and determining (242) a displacement (dx,dy) of the location (x,y) of the centre $L_{i,k}$ of said texture patch $P_{i,k}$, which maximises the value of a patch similarity information between said texture patch $P_{i,k}(dx,dy)$ of said face image $I_i$ to annotate and said texture patch $P_{j,k}$ of said warping image $W_{j,1}(I_j)$,

- determining (25), among said set A of previously annotated face images, the face annotated image and a corresponding optimal displacement (dx,dy) providing the highest value of patch similarity information,
- refining (26) said location (x,y) of said landmark $L_{i,k}$ of said set of K landmarks of said face image $I_i$ to annotate by applying said corresponding optimal displacement (dx,dy).

In other words, a local texture patch based method is implemented to refine the landmarks location, wherein, for every warped annotated image $W_{j,1}(I_j)$ of said set A of previously annotated face images, a texture patch $P_{j,k}$ of same size (typically 5x5 pixels) as said texture patch $P_{i,k}$ of said face image $I_i$ to annotate is extracted and centred on the landmark $L_{j,k}$ corresponding to the landmark $L_{i,k}$ (for example the landmark of the right corner of the lip).

Then, since these two patches are defined in the common referential of said reference image $I_1$, the texture around the given landmark of index k can be matched (24) across images. The best matching is obtained by sliding the texture patch $P_{i,k}$ of said face image $I_i$ in the common referential of said reference image $I_1$ by considering the warped image $\widehat{W_{i,1}(I_i)}$ between said face image $I_i$ to annotate and said and said reference image $I_1$, such that

$$\widehat{W_{i,1}} = W_{jbest,1} . \widehat{W_{i,jbest}}.$$

Such moving (or sliding) of said texture patch $P_{i,k}$ is operated in a research area whose size is identical or different from one landmark $L_{i,k}$ to another landmark $L_{i,k+1}$. For example, said research area is larger for lower lip landmarks than the one used for eye corners.

For every new position (dx, dy) of said texture patch $P_{i,k}$ a value of local patch similarity information is computed between the warped annotated image $W_{j,1}(I_j)$ and the warped image to annotate $\widehat{W_{i,1}(I_i)}$, by using for instance the sum of squared differences (SSD) between these two patches SSD($P_{i,k}$(dx,dy), $P_{j,k}$)

The position (dx,dy), which maximizes the patch similarity information between image $I_i$ and image $I_j$ is selected for the landmark of index k:

$$Sim(i, j, k) = \max_{dx, dy}\{SSD(P_{i,k}(dx, dy), P_{j,k})\}$$

Such value of similarity information is computed for every annotated image of said set A.

Then the image of said set A and the corresponding landmark position (dx,dy), which provides the highest value of patch similarity information, is selected:

$$\max_{j}\{Sim(i, j, k)\} = \max_{j, dx, dy}\{SSD(P_{i,k}(dx, dy), P_{j,k})\}$$

The position (x,y) of the landmark $L_{i,k}$ is then refined and becomes (x+dx, y+dy) (dx or dy being possibly negative).

Such refinement is automatically applied to all landmarks of said set of K landmarks.

It has to be noted that said patch similarity information, between said texture patch $P_{i,k}$(dx,dy) of said face image $I_i$ to annotate and said texture patch $P_{j,k}$ of said warping image $W_{j,1}(I_j)$, is not restricted to the sum of squared differences (SSD), but can be extended to other metrics such that the a sum of absolute differences (SAD), a normalized cross-correlation (NCC) or a zero-mean normalized cross-correlation (ZNCC).

Optionally, (as represented in dotted line **in figure 2),** as already described in relation with **figure 4B,** when the category of landmark points has been manually indicated by the operator when he annotated the reference image $I_1$, for the considered image to annotate $I_i$, once the location of said primary landmark points have been automatically refined (26), the secondary landmark points are automatically and evenly redistributed (101) along the contour they belong to.

Until this point of the process, all steps are performed automatically, but it is possible that some outliers landmarks remain (i.e. no similar landmark found), thus a phase 3 of manual refinement can be implemented to interact with the operator so that he indicates some corrections.

Such phase 3 of manual refinement comprises:

- considering a warping function $\widehat{W_{i,1}}$ between said face image $I_i$ to annotate and said and said reference image $I_1$, such that $\widehat{W_{i,1}} = W_{jbest,1} . \widehat{W_{i,jbest}}$, applying (31) an inverse transform $\widehat{W_{i,1}}^{-1}$ to the position of each landmark $L_{i,k}$ of said set of $K$ landmarks of said face image $I_i$ to annotate expressed in said common reference geometry of said reference image $I_1$, delivering a face image $I_i$ annotated with said landmarks $L_{i,k}$ with $1 \leq k \leq K$.

- displaying (32) said face image $I_i$ annotated with said landmarks $L_{i,k}$ with $1 \leq k \leq K$ to an operator,

- in case of error in landmarks location, receiving (33) a correction information $I_{COR}$ from said operator,

- using said correction information for updating (34) said face image $I_{i\_A}$ annotated with said landmarks $L_{i,k}$ with $1 \leq k \leq K$, delivering a validated annotated face image $I_{i\_VA}$,

- placing (35) said validated annotated face image $I_{i\_VA}$ into said set A of previously annotated face images,

- determining (36) a validated warping function $W_{i,1}$ between said validated annotated face image $I_i$ and said reference

image $I_1$ by implementing a geometry-based Procrutes analysis or by implementing a Delaunay triangulation.

Indeed, at the end of phase 2, every landmark of image $I_i$ to annotate has its location refined in the reference image referential. It is then possible to apply the inverse transform $\widehat{W_{i,1}} = W_{jbest,1} . \widehat{W_{i,jbest}}$ , as illustrated in **figure 4A,** to get the landmark positions in the original image referential.

The operator OP can then manually check the landmark positions and correct them individually in case of failure or unaccuracy on some landmarks.

Finally, a new global warp $W_{i,1}$ between the image $I_i$ and the reference image $I_1$ is computed using Procrutes analysis based on final landmarks. Such new global warp $W_{i,1}$ based on validated landmarks is more reliable than $\widehat{W_{1,1}} = W_{jbest,1} . \widehat{W_{1,jbest}}$, and is then used for the following images to annotate (typically in steps 15 of phase 1 or 22 of phase 2).

**Figure 5** schematically illustrates an example of a device in accordance with an embodiment of the invention for annotating, with a set of landmarks, each face image of a set of face images to annotate, from a set of previously annotated face images.

Only the main elements of the device for annotating, with a set of landmarks, each face image of a set of face images to annotate, from a set of previously annotated face images, are shown.

Such device comprises at least:

- a module 51 for determining a warping function $\widehat{W_{i,j}}$ between said face image $I_i$ to annotate and said annotated face image $I_j$,

- a module 52 for warping said face image $I_i$ to annotate using said warping function $\widehat{W_{i,j}}$ delivering a warped image $\widehat{W_{i,j}}(I_i)$,

- a module 53 for determining respective image similarity information $Sim(i,j)$ between said annotated face image $I_j$ and said warped image $\widehat{W_{i,j}}(I_i)$, and:

  - a module 54 for selecting, among said set A of previously annotated face images, a best annotated face image $I_{jbest}$, said best annotated face image $I_{jbest}$ being associated with similarity information of the highest value,
  - a module 55 for determining a location (x,y) of each landmark $L_{i,k}$ of said set of K landmarks of said face image $I_i$ to annotate by using a corresponding location of each landmark of a set of K landmarks of said best annotated face image $I_{jbest}$.
  - a set of face images 56, comprising face training images used for training the deformable face model,
  - memory 57, such as a volatile memory,
  - one or more processors 58 such as CPUs for executing the applications and programs stored in a non-volatile memory of the device,
  - an internal bus B1 to connect the various modules and all means well known to the skilled in the art for performing the device functionalities.

The features of the device are the same as those of the method for annotating, with a set of landmarks, each face image of a set of face images to annotate, from a set of previously annotated face images.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

For example, module 51 for determining a warping function $\widehat{W_{i,j}}$ between said face image $I_i$ to annotate and said annotated face image $I_j$, module 52 for warping said face image $I_i$ to annotate using said warping function $\widehat{W_{i,j}}$ delivering a warped image $\widehat{W_{i,j}}(I_i)$, module 53 for determining respective image similarity information $Sim(i,j)$ between said annotated face image $I_j$ and said warped image $\widehat{W_{i,j}}(I_i)$, module 54 for selecting, among said set A of previously annotated face images, a best annotated face image $I_{jbest}$, said best annotated face image $I_{jbest}$ being associated with similarity information of the highest value and module 55 for determining a location (x,y) of each landmark $L_{i,k}$ of said set of $K$ landmarks of said face image $I_i$ to annotate by using a corresponding location of each landmark of a set of $K$ landmarks of said best annotated face image $I_{jbest}$ may be provided as software components stored in memory of the device.

The one or more processing units 58 may be configured to execute the various software programs and/or sets of instructions of the software components to perform the respective functions of: determining a warping function $\widehat{W_{i,J}}$ between said face image $I_i$ to annotate and said annotated face image $I_j$, warping said face image $I_i$ to annotate using said warping function $\widehat{W_{i,J}}$ delivering a warped image $\widehat{W_{i,J}}(I_i)$ ,

determining respective image similarity information $Sim(i,j)$ between said annotated face image $I_j$ and said warped image $\widehat{W_{i,J}}(I_i),$ selecting, among said set A of previously annotated face images, a best annotated face image $I_{jbest}$, said best annotated face image $I_{jbest}$ being associated with similarity information of the highest value and determining a location (x,y) of each landmark $L_{i,k}$ of said set of $K$ landmarks of said face image $I_i$ to annotate by using a corresponding location of each landmark of a set of $K$ landmarks of said best annotated face image $I_{jbest}$, in accordance with embodiments of the invention.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

**Claims**

1. A method for annotating, with a set of $K$ landmarks, each face image $I_i$ of a set of face images to annotate, from a set $A$ of previously annotated face images, the method being implemented by a processor and comprising, for each annotated face image $I_j$ of said set A of previously annotated face images:

   - determining (11) a warping function $\widehat{W_{i,J}}$ between said face image $I_i$ to annotate and said annotated face image $I_j$,

   - warping (12) said face image $I_i$ to annotate, using said warping function $\widehat{W_{i,J}},$ to obtain a warped image

   $$\widehat{W_{i,J}}(I_i),$$

- determining (13) respective image similarity information *Sim(i,j)* between said annotated face image $I_j$ and said warped image $\widehat{W_{i,j}}(I_i)$,

the method further comprising:

- selecting (14), among said set *A* of previously annotated face images, a best annotated face image $I_{jbest}$, said best annotated face image $I_{jbest}$ being associated with similarity information of the highest value,
- determining (15) a location (x,y) of each landmark $L_{i,k}$ of said set of *K* landmarks of said face image $I_i$ to annotate by using a corresponding location of each landmark $L_{jbest,k}$ of a set of K landmarks of said best annotated face image $I_{jbest}$.

2. The method for annotating according to claim 1, wherein said image similarity information is a sum of square differences between said annotated face image $I_j$ and said warped image $\widehat{W_{i,j}}(I_i)$.

3. The method for annotating according to claim 2, wherein said sum is obtained by considering only the pixels located in an area, the contour of which is a line linking landmarks of said annotated face image $I_j$.

4. The method for annotating according to any one of the preceding claims, wherein said warping function $\widehat{W_{i,j}}$ is obtained (11) by implementing a geometry-based Procrustes analysis (111) and/or a texture-based least square congealing (112).

5. The method for annotating according to claim 4, wherein when said geometry-based Procrustes analysis (111) and texture-based least square congealing (112) are both implemented, said warping function $\widehat{W_{i,j}}$ corresponds to the warping function leading to similarity information of the highest value when comparing the value of similarity information resulting from the warping function $\widehat{W_{i,j}}_P$ obtained with said geometry-based Procrustes analysis, with the value of similarity information resulting from the warping function $\widehat{W_{i,j}}_C$ obtained with said texture-based least square congealing.

6. The method for annotating according to any one of the preceding claims, further comprising a previous locating of a face inside each mage $I_i$ of said set of face images to annotate, said face locating implementing a Viola-Jones method.

7. The method for annotating according to any one of the preceding claims, wherein said set A of previously annotated face images comprises at least a reference image $I_1$, previously manually annotated (100), said reference image $I_1$ providing a common reference geometry for all face images of said set A of previously annotated face images and of said set of face images to annotate, and wherein said determining (15) of a location (x,y) of each landmark $L_{i,k}$ of said set of K landmarks of said face image $I_i$ to annotate implements at least a warping of said set of K landmarks of said best annotated face image $I_{jbest}$ using a warping function $W_{jbest,1}$ between said best annotated face image $I_{jbest}$ and said reference image $I_1$ delivering said set of K landmarks of said face image $I_i$ to annotate expressed in said common reference geometry of said reference image $I_1$.

8. The method for annotating according to claim 7, further comprising, for each landmark $L_{i,k}$ of said set of landmarks of said face image $I_i$ to annotate expressed in said common reference geometry of said reference image $I_1$, a refining of its location (x,y) comprising:

- determining (21) a texture patch $P_{i,k}$ of a predetermined size centred on said location (x,y) of said landmark $L_{i,k}$ of said face image $I_i$ to annotate,
- for each annotated face image $I_j$ of said set A of previously annotated face images:

o warping (22) said annotated face image $I_j$ using a warping function $W_{j,1}$ between said annotated face image $I_j$ and said reference image $I_1$ delivering a warping image $W_{j,1}(I_j)$,

o in said warping image $W_{j,1}(I_j)$, determining (23) a texture patch $P_{j,k}$ of said predetermined size centred on said landmark $L_{j,k}$ corresponding to said landmark $L_{i,k}$ of said face image $I_i$ to annotate,

o moving (241) said texture patch $P_{j,k}$ of said face image $I_i$ to annotate within a research area, and determining (242) a displacement (dx,dy) of the location (x,y) of the centre $L_{i,k}$ of said texture patch $P_{i,k}$, which maximises the value of a patch similarity information between said texture patch $P_{i,k}(dx,dy)$ of said face image $I_i$ to annotate and said texture patch $P_{j,k}$ of said warping image $W_{j,1}(I_j)$,

- determining (25), among said set A of previously annotated face images, the face annotated image and a corresponding optimal displacement (dx,dy) providing the highest value of patch similarity information,
- refining (26) said location (x,y) of said landmark $L_{i,k}$ of said set of K landmarks of said face image $I_i$ to annotate by applying said corresponding optimal displacement (dx,dy).

9. The method for annotating according to claim 8, wherein said patch similarity information, between said texture patch $P_{i,k}(dx,dy)$ of said face image $I_i$ to annotate and said texture patch $P_{j,k}$ of said warping image $W_{j,1}(I_j)$, is obtained using one of the operations belonging to the group comprising:

   - a sum of square differences,
   - a sum of absolute differences,
   - a normalized cross-correlation
   - a zero-mean normalized cross-correlation.

10. The method for annotating according to claim 8, wherein the size of said research area is identical or different from one landmark $L_{i,k}$ to another landmark $L_{i,k+1}$.

11. The method for annotating according to any one of the preceding claims, wherein said set of K landmarks comprises two categories of landmarks:

    - a first category of landmarks comprising landmarks (41, 42) corresponding to extremities of facial contours or strong contrast points of said face image $I_i$ to annotate,
    - a second category of landmarks comprising landmarks (43, 44, 45) located
    between two extremities of a facial contour of said face image $I_i$ to annotate,
    the position of each landmark of said second category of landmarks being automatically determined (101) by implementing a curvilinear abscissa along a contour defined between two extremity landmarks of said first category of landmarks.

12. The method for annotating according to any one of the preceding claims 7 to 11, further comprising:

    - considering a warping function $\widehat{W_{i,1}}$ between said face image $I_i$ to annotate and said and said reference image $I_1$, such that $\widehat{W_{i,1}} = W_{jbest,1} \cdot \widehat{W_{i,jbest}}$, applying (31) an inverse transform $\widehat{W_{i,1}}^{-1}$ to the position of each landmark $L_{i,k}$ of said set of $K$ landmarks of said face image $I_i$ to annotate expressed in said common reference geometry of said reference image $I_1$, delivering a face image $I_{i\_A}$ annotated with said landmarks $L_{i,k}$ with $1 \leq k \leq K$.
    - displaying (32) said face image $I_{i\_A}$ annotated with said landmarks $L_{i,k}$ with $1 \leq k \leq K$ to an operator,
    - in case of error in landmarks location, receiving (33) a correction information $I_{\_COR}$ from said operator,
    - using said correction information for updating (34) said face image $I_{i\_A}$ annotated with said landmarks $L_{i,k}$ with $1 \leq k \leq K$, delivering a validated annotated face image $I_{i\_VA}$,
    - placing (35) said validated annotated face image $I_{i\_VA}$ into said set A of previously annotated face images,
    - determining (36) a validated warping function $W_{i,1}$ between said validated annotated face image $I_i$ and said reference image $I_1$ by implementing a geometry-based Procrustes analysis or by implementing a Delaunay triangulation.

13. A device for annotating, with a set of K landmarks, each face image $I_i$ of a set of face images to annotate, from a set A of previously annotated face images, wherein said device comprises a processor configured to control, for each annotated face image $I_j$ of said set A of previously annotated face images:

    - a module (51) for determining a warping function $\widehat{W_{i,j}}$ between said face image $I_i$ to annotate and said annotated face image $I_j$,

- a module (52) for warping said face image $I_i$ to annotate using said warping function $\widehat{W_{i,j}}$ delivering a warped image $\widehat{W_{i,J}}(I_i)$,

- a module (53) for determining respective image similarity information $Sim(i,j)$ between said annotated face image $I_j$ and said warped image $\widehat{W_{i,J}}(I_i)$, and:

- a module (54) for selecting, among said set A of previously annotated face images, a best annotated face image $I_{jbest}$, said best annotated face image $I_{jbest}$ being associated with similarity information of the highest value,
- a module (55) for determining a location (x,y) of each landmark $L_{i,k}$ of said set of $K$ landmarks of said face image $I_i$ to annotate by using a corresponding location of each landmark of a set of K landmarks of said best annotated face image $I_{jbest}$.

**14.** A computer program product downloadable from a communication network and/or recorded on a medium readable by computer and/or executable by a processor, comprising program code instructions for implementing the steps of the method for annotating, with a set of $K$ landmarks, each face image $I_i$ of a set of face images to annotate according to anyone of claims 1 to 12 when it is executed by a processor.

**15.** A non-transitory computer-readable medium comprising a computer program product recorded thereon and capable of being run by a processor, including program code instructions for implementing the steps of the method for annotating, with a set of $K$ landmarks, each face image $I_i$ of a set of face images to annotate according to anyone of claims 1 to 12 when it is executed by a processor.

Fig. 1

Fig. 3

Fig. 2

$$\hat{W}_{i,1}$$

$I_1$ ← $I_i$

$W_{jbest,1}$ $I_{jbest}$ $\hat{W}_{i,jbest}$

Fig. 4A

Fig. 4B

43 44 45

41 42

Fig. 4C

$V_2$ $\xrightarrow{W}$ $W(V_2)$

$\alpha$ $M$ $\alpha$ $W(M)$

$V_1$ $\beta$ $V_3$ $W(V_1)$ $\beta$ $W(V_3)$

$I_1$ $I_j$

B1

| | |
|---|---|
| 51 — M_D_G_W | 56 — IMAGE DATABASE |
| 52 — M_W | |
| 53 — M_D_I_Sim | 57 — MEMORY |
| 54 — M_S | |
| 55 — M_D_Loc | 58 — PROCESSORS |

Fig. 5

**EUROPEAN SEARCH REPORT**

Europäisches
Patentamt
European
Patent Office
Office européen
des brevets

Application Number

EP 15 30 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON LUCEY ET AL: "Non-rigid Face Tracking Using Short Track-Life Features", DIGITAL IMAGE COMPUTING: TECHNIQUES AND APPLICATIONS (DICTA), 2010 INTERNATIONAL CONFERENCE ON, IEEE, PISCATAWAY, NJ, USA, 1 December 2010 (2010-12-01), pages 241-248, XP031853180, ISBN: 978-1-4244-8816-2 * sect.1 problem definition sect.2 Matching Features, PDM sect.3, 4, 5 Lukas Kanade sect.6 * | 1-15 | INV. G06K9/00 |
| X | CRISTINACCE D ET AL: "Facial Feature Detection and Tracking with Automatic Template Selection", AUTOMATIC FACE AND GESTURE RECOGNITION, 2006. FGR 2006. 7TH INTERNATIO NAL CONFERENCE ON SOUTHAMPTON, UK 10-12 APRIL 2006, PISCATAWAY, NJ, USA,IEEE, 10 April 2006 (2006-04-10), pages 429-434, XP010911645, DOI: 10.1109/FGR.2006.50 ISBN: 978-0-7695-2503-7 * sect.3 * | 1-15 | |
| X | YANG WANG ET AL: "Non-Rigid Object Alignment with a Mismatch Template Based on Exhaustive Local Search", 2013 IEEE INTERNATIONAL CONFERENCE ON COMPUTER VISION, 1 October 2007 (2007-10-01), pages 1-8, XP055220868, ISSN: 1550-5499, DOI: 10.1109/ICCV.2007.4409188 | 1-4, 13-15 | |
| A | * sect.4.1 * | 5,12 | |

TECHNICAL FIELDS
SEARCHED      (IPC)

G06K
G06T

-/--

The present search report has been drawn up for all claims

| Place of search | Date of completion of the search | Examiner |
|---|---|---|
| The Hague | 7 December 2015 | Darolti, Cristina |

EPO FORM 1503 03.82 (P04C01)

**EP 3 107 032 A1**

# EUROPEAN SEARCH REPORT

**Application Number**

EP 15 30 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MINGCAI ZHOU ET AL: "AAM based face tracking with temporal matching and face segmentation", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 June 2010 (2010-06-13), pages 701-708, XP031725971, ISBN: 978-1-4244-6984-0 | 1-4, 13-15 | |
| A | * sect.3 * | 5-12 | |
| A | IAIN MATTHEWS ET AL: "Active Appearance Models Revisited", INTERNATIONAL JOURNAL OF COMPUTER VISION, KLUWER ACADEMIC PUBLISHERS, BO, vol. 60, no. 2, 1 November 2004 (2004-11-01), pages 135-164, XP019216428, ISSN: 1573-1405, DOI: 10.1023/B:VISI.0000029666.37597.D3 * sect.3 * | 1-15 | |
| A | COOTES T F ET AL: "Active shape models - their training and application", COMPUTER VISION AND IMAGE UNDERSTANDING, ACADEMIC PRESS, US, vol. 61, no. 1, 1 January 1995 (1995-01-01), pages 38-59, XP002607166, ISSN: 1077-3142, DOI: 10.1006/CVIU.1995.1004 [retrieved on 2002-04-24] * sect.3.1, Appendix A * | 1-15 | TECHNICAL FIELDS SEARCHED (IPC) |

-/--

The present search report has been drawn up for all claims

| Place of search | Date of completion of the search | Examiner |
|---|---|---|
| The Hague | 7 December 2015 | Darolti, Cristina |

Europäisches
Patentamt

European
Patent Office

Office européen
des brevets

# EUROPEAN SEARCH REPORT

Application Number

EP 15 30 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Nannan Wang ET AL: "Facial Feature Point Detection: A Comprehensive Survey", International Journal of Computer Vision manuscript, 4 October 2014 (2014-10-04), XP055221277, Retrieved from the Internet: URL:http://arxiv.org/pdf/1410.1037.pdf [retrieved on 2015-10-15] * sect. 2.1 and 5.2 * | 1-15 | |
| A | SAGONAS CHRISTOS ET AL: "A Semi-automatic Methodology for Facial Landmark Annotation", 2013 IEEE CONFERENCE ON COMPUTER VISION AND PATTERN RECOGNITION WORKSHOPS, IEEE, 23 June 2013 (2013-06-23), pages 896-903, XP032479944, DOI: 10.1109/CVPRW.2013.132 [retrieved on 2013-09-11] * sect.3.2 Algorithm 1 * | 1-15 | |

TECHNICAL FIELDS
SEARCHED (IPC)

The present search report has been drawn up for all claims

| Place of search | Date of completion of the search | Examiner |
|---|---|---|
| The Hague | 7 December 2015 | Darolti, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. TONG.** Automatic facial landmark labeling with minimal supervision. *IEEE Conference on Computer Vision and Pattern Recognition,* 20 June 2009, 2097-2104
- **X. LIU.** Facial Contour labelling vi Congealing. *ECCV2010 European Conference on Computer Vision*
- **C. SAGONAS.** A semi-automatic methodology for facial landmark annotation. *IEEE Conference on Computer Vision and Pattern Recognition,* 23 June 2013, 896-903

- **M. COX et al.** Least squares congealing for Unsupervised Alignment of images. *IEEE International on Conference on Computer Vision and Pattern Recognition (CVPR),* June 2008
- **J. P. LEWIS.** Fast Normalized Cross-Correlation. *Vision Interface Conference,* 1995, 120-123
- **I. MATTHEWS et al.** Active Appearance Models Revisited. *International Journal of computer Vision,* November 2004, vol. 60 (2), 135-164